# EUROPÄISCHE PATENTSCHRIFT

(11) **EP 1 026 404 B1**
(45) Veröffentlichungstag und Bekanntmachung des Hinweises auf die Patenterteilung: **18.08.2004**
(21) Anmeldenummer: 99121320.8
(22) Anmeldetag: 26.10.1999
(51) Int. Cl.: F04D 13/06, F04D 29/58, H02K 9/197

(54) **Elektrische Förderpumpe**
Electrically driven centrifugal pump
Pompe centrifuge à moteur électrique

(30) Priorität: 03.02.1999 DE 19904148
(43) Veröffentlichungstag der Anmeldung: 09.08.2000
(73) Patentinhaber: Pierburg GmbH, 41460 Neuss (DE)
(72) Erfinder: Radermacher, Bernhard, 41748 Viersen (DE); Garcke, Henning, 47877 Willich (DE)
(74) Vertreter: Ter Smitten, Hans

(56) Entgegenhaltungen:
- DE-U- 29 613 050
- US-A- 2 887 062
- PATENT ABSTRACTS OF JAPAN vol. 014, no. 222 (E-0926), 10. Mai 1990 (1990-05-10) & JP 02 055550 A (EBARA CORP), 23. Februar 1990 (1990-02-23)

## Beschreibung

Die Erfindung betrifft eine elektrische Förderpumpe nach dem Oberbegriff des Patentanspruchs 1.

Derartige Förderpumpen werden z. B. als Kühlwasserpumpen eingesetzt. Aus dem Fachbuch Kreiselpumpen Lexikon, 3. Auflage, 1989 der Firma KBS, Druck 010014 A.N. 70350 Schneiderdruck GmbH, D-6750 Kaiserslautern, geht hervor, Seite 203 und 204, dass diese als Nassläufermotor betrieben werden, bei denen unterschieden wird mit trockener oder nasser Statorwicklung. Eine nasse Statorwicklung ist mit hoher Stromdichte belastbar, da sie gekühlt wird.

Es hat sich jedoch gezeigt, dass ein nasslaufender Rotor hohe Panschverluste verursachen kann.

Aus der DE 43 04 149 C1 oder JP-A-02 055550 ist eine Förderpumpe bekannt, bei der eine Rotorkammer gegenüber einer flüssigkeitsdurchströmten Statorkammer hermetisch abgeschlossen ist. Diese Massnahme bewirkt, dass der Rotor in der Rotorkammer in seinen Lagern unzureichend geschmiert wird.

Es ist daher Aufgabe der Erfindung, Massnahmen aufzufinden, mit denen diese unzureichende Schmierung vermieden wird.

Diese Aufgabe ist durch die im Kennzeichen des Patentanspruchs 1 genannten Merkmale gelöst. Mit der erfindungsgemässen Ausführung liegt eine mit hohem Wirkungsgrad betreibbare elektrischer Förderpumpe vor, die für einen harten Einsatz im Kraftfahrzeug geeignet ist.

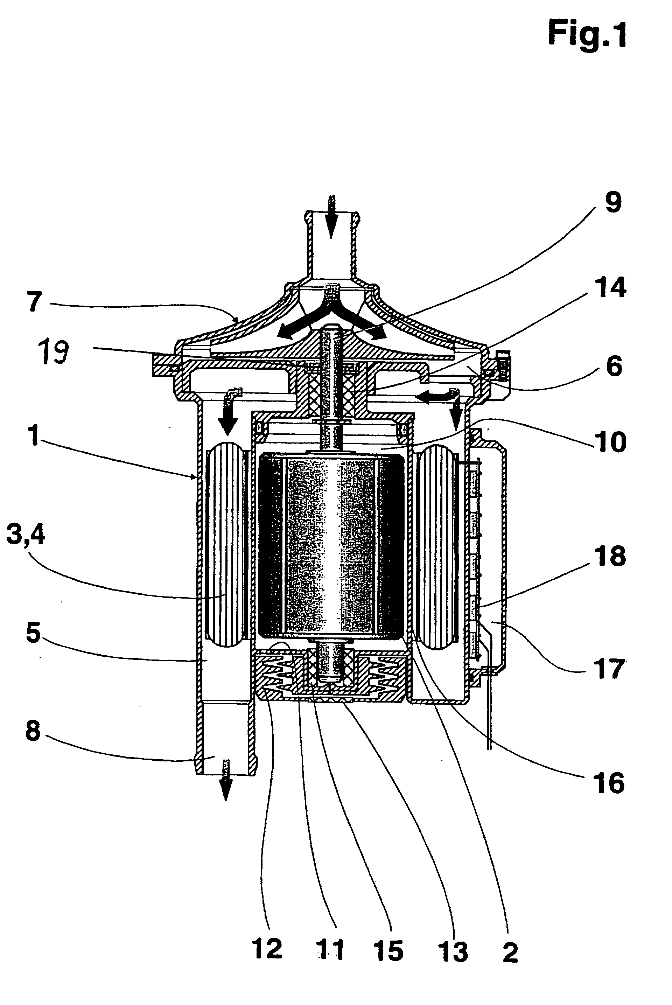

Ein Ausführungsbeispiel der Erfindung ist in der Zeichnung dargestellt, die einen Längsschnitt zeigt, aus dem eine elektrische Förderpumpe 1 mit einem als Innenläufer ausgebildeten Rotor 2 und mit einem aussenliegenden Stator 3 erkennbar ist.

Der Stator 3 liegt mit seinen Statorwicklungen 4 im Förderstrom, der in einer aussenliegenden flüssigkeitsgefüllten Gehäusekammer 5 herrscht, die in der dargestellten Ausführung mit einem Auslass 6 einer Kreiselpumpe 7 und mit einem Auslassstutzen 8 verbunden ist.
Die Kreiselpumpe 7 wird von einer mit dem Rotor 2 verbundenen Welle 9 angetrieben.

Der Rotor 2 ist in einer gegenüber der flüssigkeitsführenden Gehäusekammer 5 abgedichteten Rotorkammer 10 angeordnet, die überwiegend mit Gas gefüllt ist. Hierdurch sind die Panschverluste reduziert.

Die Rotorkammer 10 ist über eine Belüftungsöffnung 11 mit der freien Umgebung verbunden, wobei die Belüftungsöffnung 11 vorteilhafterweise über ein Labyrinthsystem 12 in die Umgebung austritt.

Zusätzlich zu dieser Massnahme kann es vorteilhaft sein, wenn die Belüftungsöffnung 11 durch eine flüssigkeitsdichte, jedoch gasdurchlässige Membrane 13 verschlossen ist. Diese Massnahme bewirkt, dass Leckage von Förderflüssigkeit durch ein pumpenseitiges Rotorlager 14 von zwei Rotorlagern 14, 15 in die Rotorkammer 10 durch den bei Betriebstemperatur in der Rotorkammer 10 entstehenden Dampfdruck vermindert ist und dass eingetretene Flüssigkeit als Dampf durch die Membrane 13 in die Umgebung austreten kann.

Es ist vorgesehen, dass die in der Rotorkammer 10 befindlichen Dampf- und Flüssigkeitsmengen teilweise an den Rotorlagern 14, 15 gebunden sind, wodurch eine sehr wirkungsvolle Schmierung des Rotors 2 bzw. der Welle 9 in den Rotorlagern 14, 15 erreicht wird.

Dadurch, dass die flüssigkeitsführende Gehäusekammer 5 mit einer ihrer Aussenwände 16 direkten kühlenden Kontakt zu einer in einer trockenen Gehäusekammer 17 angeordneten Leistungselektronik 18 aufweist, ist die thermische Belastung von elektronischen Bauteilen der Leistungselektronik 18 herabgesetzt.

In der gezeigten Ausführung ist eine Leckage von Förderflüssigkeit durch eine vor dem pumpenseitigen Rotorlager 14 angeordnete Wellendichtung 19 minimiert. Diese Dichtung 19 kann unter Umständen auch hinter dem Rotorlager 14 angeordnet werden, wobei dann das Rotorlager 14 voll der Förderflüssigkeit ausgesetzt wäre.

## Patentansprüche

1. Elektrische Förderpumpe mit einem als Innenläufer ausgeführten Rotor und einem aussenliegenden Stator, bei der der Stator mit Statorwicklungen im Förderstrom liegt und der Rotor (2) in einer gegenüber einer flüssigkeitsführenden Gehäusekammer (5) abgedichteten Rotorkammer (10) angeordnet ist, die überwiegend mit Gas gefüllt ist, **dadurch gekennzeichnet, dass** die Rotorkammer (10) über eine Belüftungsöffnung (11) mit der freien Umgebung verbunden ist.

2. Förderpumpe nach Anspruch 1, **dadurch gekennzeichnet, dass** die Belüftungsöffnung (11) über ein Labyrinthsystern (12) in die Umgebung austritt.

3. Förderpurnpe nach Anspruch 1 oder 2, **dadurch gekennzeichnet, dass** die Belüftungsöffnung (11) durch eine flüssigkeitsdichte, jedoch gasdurchlässige Membrane (13) verschlossen ist.

4. Förderpumpe nach Anspruch 3, **dadurch gekennzeichnet, dass** eine Leckage von Förderflüssigkeit in die Rotorkammer (10) durch den bei Betriebstemperatur in der Rotorkamrner (10) entstehenden Dampfdruck vermindert ist und dass eingetretene Flüssigkeit als Dampf durch die Membrane (13) in die Umgebung austreten kann.

5. Förderpumpe nach Anspruch 4, **dadurch gekennzeichnet, dass** die in der Rotorkamrner (10) befindlichen Dampf- und Flüssigkeitsmengen teilweise an Rotorlagern (14, 15) des Rotors (2) bzw. einer Rotorwelle (9) gebunden sind.

6. Förderpumpe nach einem der Ansprüche 4 oder 5, **dadurch gekennzeichnet, dass** eine Leckage von Förderflüssigkeit in die Rotorkammer (10) durch eine vor oder hinter dem pumpenseitigen Rotorlager (1 4) angeordnete Wellendichtung (1 9) minimiert ist.

## Claims

1. An electrically-driven delivery pump having a rotor constructed as an internal rotor and a stator located on the outside, in which the stator is located with stator windings in the delivery flow and the rotor (2) is arranged in a rotor chamber (10) which is sealed with respect to a fluid-conducting housing chamber (5) and is filled predominantly with gas, **characterised in that** the rotor chamber (10) is connected to the open environment by way of a ventilation opening (11).

2. A delivery pump according to Claim 1, **characterised in that** the ventilation opening (11) exits to the environment by way of a labyrinth system (12).

3. A delivery pump according to Claim 1 or 2, **characterised in that** the ventilation opening (11) is closed by a fluid-tight, yet gas-permeable, diaphragm (13).

4. A delivery pump according to Claim 3, **characterised in that** the leakage of delivery fluid into the rotor chamber (10) is reduced as a result of the vapour pressure produced in the rotor chamber (10) at operating temperature, and **in that** fluid which has entered can exit as vapour to the environment through the diaphragm (13).

5. A delivery pump according to Claim 4, **characterised in that** some of the vapour and fluid located in the rotor chamber (10) adheres to rotor bearings (14, 15) of the rotor (2) or a rotor shaft (9).

6. A delivery pump according to one of Claims 4 or 5, **characterised in that** the leakage of delivery fluid into the rotor chamber (10) is minimised by a shaft seal (19) arranged upstream or downstream of the pump-side rotor bearing (14).

## Revendications

1. Pompe d'alimentation électrique comprenant un rotor réalisé sous forme de rotor intérieur et un stator extérieur, dans laquelle le stator se situe par ses enroulements dans le flux d'alimentation et le rotor (2) est disposé dans un compartiment (10) principalement rempli de gaz et étanchéifié par rapport à un compartiment de carter (5) véhiculant du liquide, **caractérisée en ce que** le compartiment de rotor (10) est relié à l'ambiance par une ouverture de ventilation (11).

2. Pompe d'alimentation suivant la revendication 1, **caractérisée en ce que** l'ouverture de ventilation (11) débouche à l'ambiance par l'intermédiaire d'un système à labyrinthe (12).

3. Pompe d'alimentation suivant l'une des revendications 1 et 2, **caractérisée en ce que** l'ouverture de ventilation (11) est fermée par une membrane (13) étanche aux liquides, mais perméable aux gaz.

4. Pompe d'alimentation suivant la revendication 3, **caractérisée en ce qu'**une fuite de liquide d'alimentation dans le compartiment de rotor (10) est réduite par la pression de vapeur engendrée à la température de service dans le compartiment de rotor (10), et que le liquide admis peut s'échapper à l'ambiance sous forme de vapeur au travers de la membrane (13).

5. Pompe d'alimentation suivant la revendication 4, **caractérisée en ce que** les quantités de vapeur et de liquide situées dans le compartiment de rotor (10) sont fixées en partie sur les paliers (14, 15) du rotor (2) ou d'un arbre de rotor (9).

6. Pompe d'alimentation suivant l'une des revendications 4 et 5, **caractérisée en ce qu'**une fuite de liquide d'alimentation dans le compartiment de rotor (10) est minimisée par une garniture d'arbre (19) disposée devant ou derrière le palier de rotor (14) côté pompe.
